# EUROPEAN PATENT SPECIFICATION

(11) **EP 0 360 569 B1**
(45) Date of publication and mention of the grant of the patent: **19.04.1995**
(21) Application number: 89309535.6
(22) Date of filing: 19.09.1989
(51) Int. Cl.: G05D 7/06, G01F 1/06

(54) **Flow control device**
Vorrichtung zur Durchflusssteuerung
Dispositif de commande de débit

(30) Priority: 21.09.1988 GB 8822239
(43) Date of publication of application: 28.03.1990
(73) Proprietor: CARADON MIRA LIMITED, Cheltenham Gloucestershire GL52 5EP (GB)
(72) Inventor: Winnington, Terence Leslie, Stroud Gloucestershire (GB); Whale, Geoffrey Hawke, Nailsworth Gloucestershire (GB)
(74) Representative: Knowles, Audrey Elizabeth

(56) References cited:
- DE-A- 2 446 131
- FR-A- 2 146 289
- FR-A- 2 532 391
- GB-A- 2 175 452
- US-A- 3 212 751
- US-A- 3 949 964
- US-A- 4 501 298
- MACHINE DESIGN. vol. 58, no. 20, 11 September 1986, CLEVELAND US pages 83 - 86;Anthony J.Van Gilder: "Digital control of fluid flow"

## Description

This invention relates to a flow control device, in particular, though not esclusively, a flow control device for use with a fluid flow line such as a water supply pipe.

Solenoid valves commonly comprise an electromagnet having an energising coil and a shuttle axially movable between first and second end positions for controlling movement of a valve member relative to a valve seating in response to the voltage applied to the coil.

In the known solenoid valves, the shuttle is biassed to the first end position by a restoring force, for example a return spring, in which the valve member engages the valve seating to close the valve when the coil is de-energised and is displaced against the biassing of the restoring force to the second position in which the valve member disengages the valve seating to open the valve by the attraction forces generated between the electromagnet and the shuttle when the coil is energised.

The advantage of such valves is that a fast changeover between the open and closed conditions is obtained by energising and de-energising the coil. Consequently, such valves are particularly suitable for applications requiring a simple on/off control of fluid flow but are not suited to applications requiring a progressive control of fluid flow between the fully open and closed conditions of the valve.

US-A-4,501,298 discloses a solenoid actuated valve device having a solenoid coil wound on a valve bobbin slidably mounted on a core, permanent magnets secured in the valve body on opposite sides of the core so that the magnetic flux thereof intersects the winding of the solenoid coil at right angles thereto, and an electromagnet defining a magnetic circuit with the core and the permanent magnets to provide a magnetic force causing the bobbin to move axially against a spring force in proportion to the current flowing through the coil for controlling fluid flow.

FR-A-2146289 discloses a rotary fluid-flow meter having a lightweight rotor permanently mounted on an axial shaft with the rotor assembly having a specific gravity substantially equal to that of the fluid so that the assembly can rotate freely with no axial load on the bearing surfaces.

It is an object of the present invention to provide a solenoid valve in which repulsion forces between an electromagnet and shuttle are utilised to control flow rate by varying the energising voltage to adjust progressively the position of a valve member relative to a valve seating.

According to the present invention as defined in Claim 1 there is provided a solenoid valve for controlling fluid flow comprising an electromagnet having an energising coil and a shuttle axially movable against the biasing of a restoring force in response to an energising voltage applied to the coil for controlling movement of a valve member relative to a valve seating with the position of the valve member being adjustable to control flow by varying the said energising voltage characterised in that a pilot valve is operatively associated with the shuttle and is axially movable with the shuttle against the biasing of the restoring force in response to the voltage applied to the coil between a closed position when the coil is de-energised and an open position when the coil is energised for controlling movement of the valve member relative to the valve seating by means of the hydrostatic fluid pressure acting on the valve member, and the shuttle includes a low coercivity material and a permanent magnet with the permanent magnet being arranged so that, on energising the coil, the shuttle is displaced by a repulsion force generated between the electromagnet and the permanent magnet and thereby opens the pilot valve causing the valve member to move away from the valve seating allowing fluid flow, wherein the said repulsion force decreases with movement of the shuttle against the biasing of the restoring force such that, by varying the energising voltage applied to the coil, the displacement of the shuttle and therefore the position of the valve member relative to the valve seating is progressively adjustable for controlling fluid flow rate.

In this invention, by varying the energising voltage an accurately defined equilibrium of forces is obtained at progressively adjusted positions of the valve member for controlling the flow rate.

Advantageously, means is provided for adjusting the energising voltage to maintain a selected flow rate substantially constant. For example, such means may comprise a flowmeter arranged to monitor the flow rate and generate a signal related to the flow rate for adjusting the energising voltage to maintain the selected flow rate substantially constant.

Preferably, the flowmeter comprises a flow monitoring turbine having a rotor and pick-up means responsive to rotation of the rotor for generating the signal.

Advantageously, the rotor is adapted to be self-centering. For example, the rotor may have a density substantially the same or slightly lower than that of the fluid to be monitored so that the forces generated on rotation of the rotor tend to centre the rotor.

Alternatively or in addition, the rotor may be arranged so that inflowing fluid is uniformly distributed around the peripheral edge of the rotor so that the fluid forces acting on the rotor tend to centre the rotor.

In a preferred construction, the rotor is positioned in an annular chamber having a fluid orifice, for example a circumferential slot or a series of circumferentially spaced holes, at the periphery of the rotor for uniformly distributing the fluid flow.

Advantageously, the fluid orifice connects the chamber to an annular outer chamber having a tangential fluid inlet so that the fluid flow forms a vortex, and the tangential inlet is preferably axially offset relative to the fluid orifice thereby ensuring that the vortex is properly developed as it flows through the rotor. As a result, the rotor speed and signal from the pick-up is more consistently proportional to the flow rate.

The solenoid valve and flowmeter may be arranged so that the rotor is concentric with the valve seating giving a compact arrangement but limiting the minimum diameter of rotor that can be employed.

Alternatively, the solenoid valve and flowmeter may be separate from each other thereby removing the limitation on the diameter of the rotor and allowing a proportionally smaller diameter rotor to be employed which works better at low flow rates and starts more reliably.

With such separate arrangement, the flowmeter may be positioned upstream or downstream of the solenoid valve and both components may be combined in a single flow control device having suitable connectors for connection to a fluid line.

These and other features and advantages of the invention in each of its aspects will be apparent from the following detailed description of exemplary embodiments with reference to the accompanying drawings wherein:-
FIGURE 1 is a section through a first embodiment of a flow control device comprising a solenoid valve according to the invention and a flowmeter;
FIGURE 2 is a section on the line 2-2 of Figure 1;
FIGURE 3 is a detail view showing the forces acting on the solenoid shuttle;
FIGURE 4 is a graph showing the relationship between displacement of the shuttle and the magnetic and spring forces at different applied voltages;
FIGURE 5 is a side view of a second embodiment of a flow control device comprising a solenoid valve according to the invention and a flowmeter;
FIGURE 6 is a section on the line 6-6 of Figure 5; and
FIGURE 7 is a section on the line 7-7 of Figure 6.

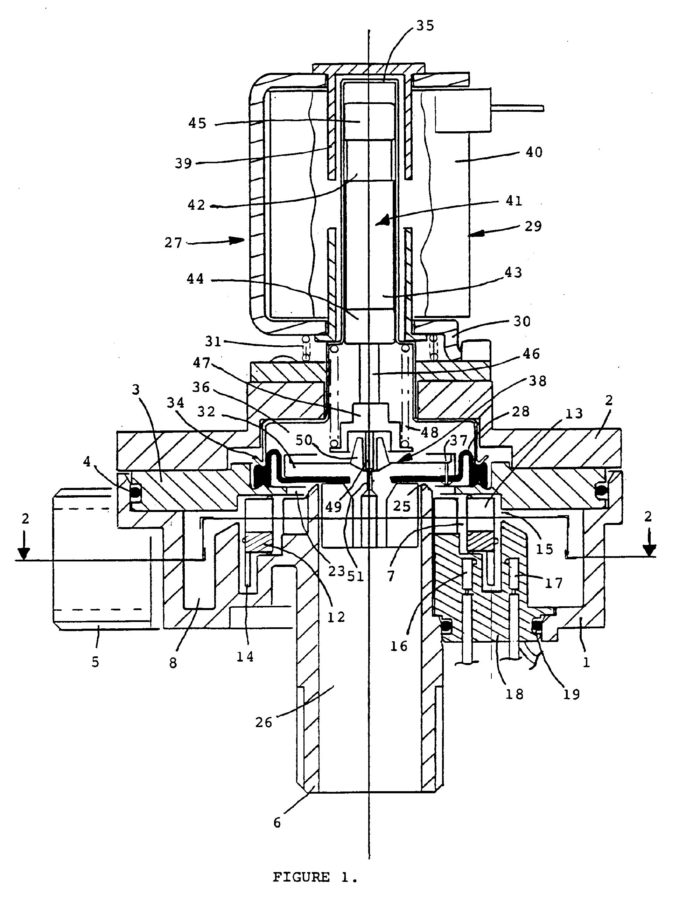

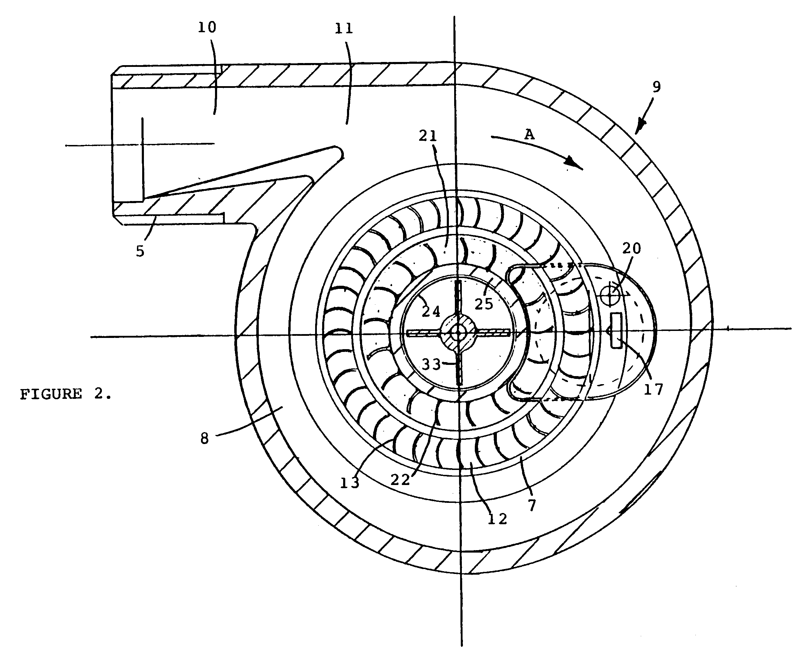

The flow control device shown in Figures 1 and 2 of the drawings comprises a main body 1 and a cover 2 releasably secured to the body 1 with an intermediate plate 3 clamped therebetween and sealed relative to the body 1 by an O-ring 4.

The body 1 has inlet and outlet bosses 5 and 6 respectively for connection to fluid supply pipes (not shown) and defines with the intermediate plate 3 concentric annular inner and outer chambers 7 and 8 respectively of a turbine flowmeter 9.

A passage 10 leading from the inlet boss 5 defines a tangential entry port 11 opening into the outer chamber 8 so that fluid entering the outer chamber 8 is rotated in the direction of the arrow A forming a free vortex.

Located in the inner chamber 7 is a free floating rotor 12 with radially extending curved blades 13 on one side and a castellated skirt 14 on the other side.

The blades 13 are located in a recessed portion of the intermediate plate 3 and are aligned at the peripheral edge of the rotor 12 with a circumferential slot 15 connecting the chambers 7,8. In this way, it is ensured that all the fluid flows radially inwards through the blades 13 and the rotor 12 is rotated at the same speed as the fluid entering the inner chamber 7 through the slot 15.

The skirt 14 is positioned between opposed optical pick-ups 16,17 mounted in a block 18 releasable secured to the main body 1 and sealed by an O-ring 19. The pick-ups 16,17 monitor the rotation of the rotor 12 and generate a signal related to the rotational speed from which the flow rate is computed by any suitable means (not shown). The curved blades 13 ensure that the maximum drive forces are extracted to provide a signal even at very low flow rates. The rotor 12 may be adapted for monitoring the rotational speed by any suitable features and the optical pick-ups 16,17 may be replaced by suitable magnetic or acoustic sensors as appropriate.

The rotor 12 is mounted without the use of bearings or similar means and is made of plastics or other suitable material of substantially the same or preferably slightly lower density than the fluid. In this way, the centre of gravity of the rotor 12 tries to find the eye of vortex thereby providing a force tending to centre the rotor 12.

An additional force tending to centre the rotor 12 is provided by the uniform distribution of the fluid flow entering the inner chamber 7 around the peripheral edge of the rotor 12 through the slot 15. In this way, if the rotor 12 moves to one side of the inner chamber 7, the fluid forces will increase whilst simultaneously decreasing on the opposite side producing a net force tending to return the rotor 12 to a central position within the inner chamber 7.

By the special construction and arrangement of the free floating rotor 12, frictional forces are reduced so that a wide range of flow rates can be monitored, for example from 100cc per minute up to 10 litres per minute giving a turn-down ratio of 100.

Also mounted in the block 18 is a temperature sensor 20 for monitoring and generating a signal related to the temperature of the fluid flowing through the device.

After passing through the rotor 12, the fluid is decelerated to take out the swirl velocity and recover some of its velocity head by passage through a de-spinning stator 21 having radially extending curved blades 22 arranged to deflect the fluid axially through a central opening 23 in the intermediate plate 3 prior to passing through an exit port 24 defined by an annular valve seating 25 concentric with the rotor 12 and communicating with the outlet boss 6 through an axial passage 26.

The flow of fluid through the device is controlled by a solenoid valve 27 having a servo-assisted diaphragm 28 arranged for axial movement relative to the valve seating 25 under the control of a solenoid 29 mounted on the cover plate 2 by a clamp 30 and holding spring 31.

The diaphragm 28 has a central support plate 32 provided with a flow straightener and guide 33 located in the exit port 24 and is clamped at the peripheral edge between the intermediate plate 3 and a flanged rim 34 of a sheath 35 retained by the cover plate 2.

The sheath 35 defines a control chamber 36 on one side of the diaphragm 28 which communicates with the upstream side of the valve seating 25 through a bleed hole 37 in the diaphragm 28 and support plate 32 and with the downstream side of the valve seating 25 through a pilot valve 38.

The sheath 35 extends outwards through the cover plate 2 and the solenoid 29 includes an electromagnet 39 of soft iron or similar material having an energising coil 40 connected to a suitable voltage source (not shown) which surrounds the sheath 35.

Slidably mounted in the sheath 35 for axial movement under the control of the solenoid 29 is a shuttle 41 of which one end portion comprises a permanent magnet 42, for example a sintered samarium cobalt magnet, and the other end portion comprises a slug 43 of low coercivity material, for example nickel plated soft iron or a magnetisable stainless steel.

Low friction plastics bushes 44,45 provided at opposed ends of the shuttle 41 reduce frictional forces and facilitate sliding movement of the shuttle 41 within the sheath 35.

Extending axially from one end of the shuttle 41 is an actuator rod 46 having a seat member 47 at the free end and a return spring 48 encircling the rod 46 acts between the sheath 35 and the seat member 47 to bias the shuttle 41 towards the diaphragm 28.

The seat member 47 is provided with an axially extending pin 49 of the pilot valve 38 that is received in a guide 50 for co-operating with a nozzle orifice 51 in the support plate.

With the coil 40 de-energised, the pin 49 engages and closes the needle orifice 51 under the biassing of the return spring 48. As a result, the fluid pressure within the control chamber 36 increases and urges the diaphragm 28 axially to engage the valve seating 25 thereby closing the exit port 24 and stopping fluid flow through the device.

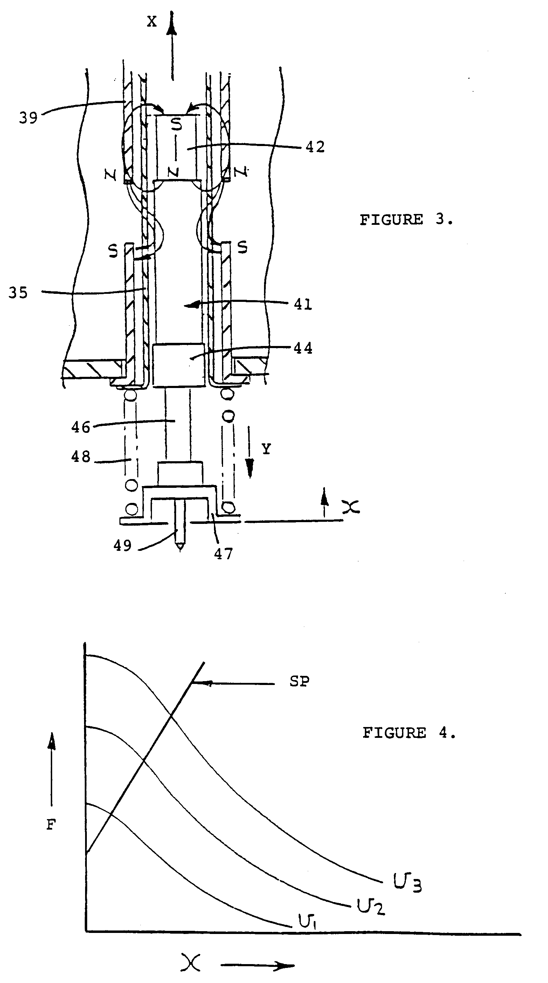

When the coil 40 is energised, an electromagnetic field is created as shown in Figure 3 in which the North pole of the permanent magnet 42 of the shuttle 41 is opposite the North pole of the electromagnet 39 generating a repulsion force which acts to displace the shuttle 41 away from the diaphragm 28 in the direction of arrow X against the biassing of the return spring 48. As a result, the pin 49 disengages the nozzle orifice 51 releasing the increased fluid pressure within the control chamber 36 and the diaphragm 28 moves axially away from the valve seating 25 to a balanced equilibrium position thereby opening the exit port 24 and allowing fluid flow through the device.

As shown in Figure 4, the repulsion force "F" decreases with displacement "x" of the shuttle 41, i.e. the maximum repulsion force "F" is obtained on energising the coil with the valve closed. This is the opposite of conventional solenoid valves in which the shuttle is displaced by attraction forces which increase with displacement of the shuttle.

As a result, by appropriate selection of the spring rate "SP" of the return spring 48 and the energising voltage "v₁", "v₂", "v₃" applied to the coil 40, displacement of the shuttle 41 can be controlled to adjust progressively the position of the shuttle 41 between two end positions corresponding to closed and fully open positions of the valve to vary the flow rate as desired.

When the coil 40 is de-energised, the restoring force of the return spring 48 axially displaces the shuttle 41 towards the diaphragm 28 in the direction of arrow Y causing the pin 49 to re-engage the needle orifice 51. As a result, the fluid pressure in the control chamber 36 increases and urges the diaphragm 28 axially to re-engage the valve seating 25 thereby closing the exit port 24 and preventing fluid flow through the device.

The undesirable effects of hysteresis in the magnetic circuit on repeatability of positioning and in reversing movement of the shuttle 41 may be eliminated by the use of pulse width modulation techniques on the coil 40 such that the magnetic field is substantially reduced between each excitation pulse. This has the additional benefit of introducing a small vibration in the shuttle 41 which reduces further the frictional forces between the bushes 44,45 and the sheath 35.

As will now be understood, the solenoid valve 27 permits adjustment of the fluid flow rate by varying the voltage applied to the coil 40 to alter the repulsion force "F" acting on the shuttle 41 and the flowmeter 9 enables a selected flow rate to be maintained substantially constant by utilising the signal generated by the pick-ups 16,17 to adjust the voltage to correct any variation in the flow rate from that selected.

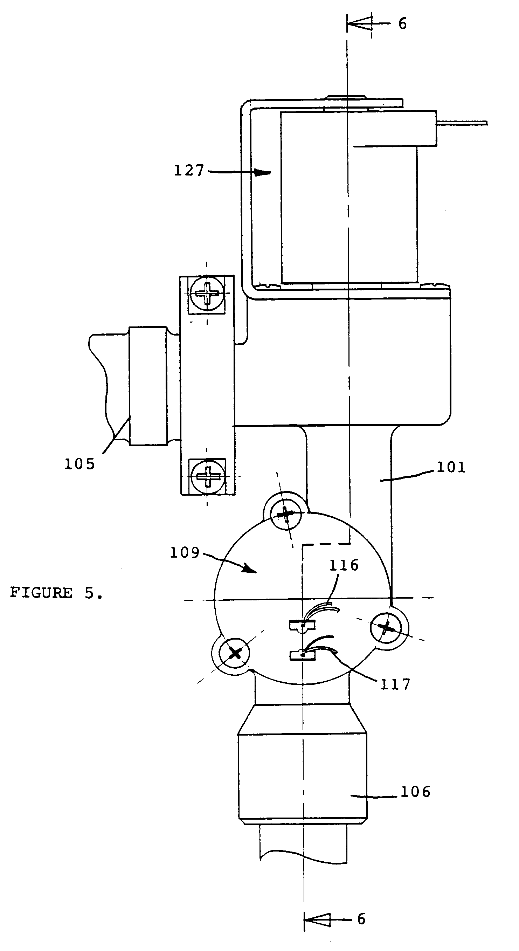

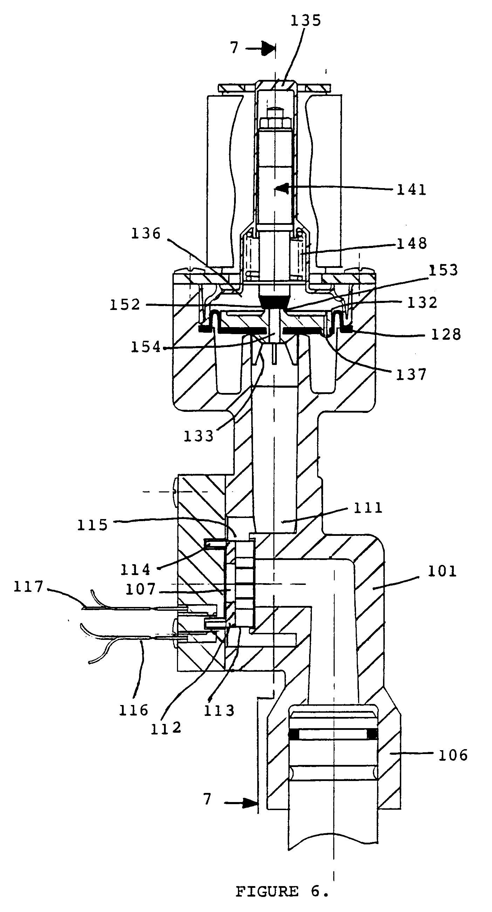

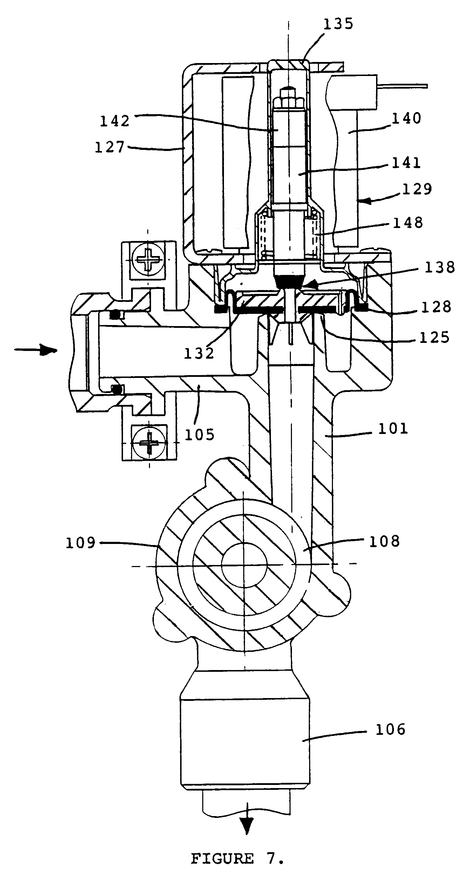

Referring now to Figures 5 to 7 of the accompanying drawings, a second embodiment of flow control device is shown, like reference numerals in the series 100 being used to indicate parts corresponding to the first embodiment above-described.

In this second embodiment, the flow meter 109 and solenoid valve 127 are located in separate sections of the fluid passageway connecting the inlet and outlet bosses 105,106 of the main body 101 of the device. As shown the flowmeter 109 is downstream of the solenoid valve 127 but it will be understood that the flowmeter 109 could be positioned in a section of the passageway upstream of the solenoid valve.

The advantage of separating the flowmeter and solenoid valve is that the rotor 112 is no longer concentric with the valve seating 125 of the solenoid valve 127 and the de-spinning stator 21 required to smooth the flow in the first embodiment can be dispensed with. As a result a proportionally smaller diameter rotor 112 can be employed which starts more reliably and provides better response at low flow rates.

A further modification of the flowmeter 109 is the axially offset arrangement of the inlet port 111 relative to the circumferential slot 115 which ensures that the vortex is properly developed before flowing through the rotor 112 thereby producing a rotor speed and signal from the pick-ups 116,117 that is more consistently proportional to the flow rate. This offset arrangement of the inlet port 111 and slot 115 can be employed in the first embodiment above-described if desired.

The solenoid valve 127 is of generally similar construction to the first embodiment but with a modified pilot valve 138 consisting of a flat rubber disc 152 arranged to engage a valve seating 153 integral with the diaphragm support plate 132 to close a relief port 154.

The operation of this second embodiment with the separate flowmeter 109 and solenoid valve 127 is similar to that of the first embodiment and will be understood by those skilled in the art from the description given of the operation of the first embodiment.

The invented flow control devices above-described have particular application to ablutionary installations and in particular to ablutionary shower installations. For example, a conventional thermostatically controlled mixing valve may be replaced by a respective flow control device in each of the hot and cold water supplies. In this way, mixing of the supplies may be effected at any convenient location, for example within the shower head, and pulsing of the supplies may be effected by appropriate control of the respective flow control devices.

The flow control device may also be provided in an instantaneous water heater to control the flow rate and thus the temperature to which the water is heated.

It will be understood that the invention is not limited to the embodiments of the flow control device above-described. For example, the solenoid valve and flow monitoring turbine incorporated in the flow control device may be constructed as individual units for separate application.

The shuttle may be arranged so that the South pole of the permanent magnet is opposite the South pole of the electromagnet to generate repulsion forces for displacing the shuttle on energising the coil.

The continuous circumferential slot orifice connecting the inner and outer chambers of the turbine may be replaced by any other suitable orifice, for example a series of circumferentially spaced holes uniformly or non-uniformly spaced around the peripheral edge of the rotor to provide a plurality of individual jets acting to centre the rotor within the inner chamber.

The restoring force acting on the shuttle may be a spring as described or any other suitable means including hydraulic, magnetic and pneumatic forces.

The turbine may incorporate a temperature sensor as described in the first embodiment or this may be omitted.

## Claims

1. A solenoid valve (27;127) for controlling fluid flow comprises an electromagnet (39;139) having an energising coil (40;140) and a shuttle (41;141) axially movable against the biassing of a restoring force (48;148) in response to an energising voltage applied to the coil (40;140) for controlling movement of a valve member (28;128) relative to a valve seating (25;125) with the position of the valve member (28;128) being adjustable to control flow by varying the said energising voltage characterised in that a pilot valve (38,138) is operatively associated with the shuttle (41;141) and is axially movable with the shuttle (41;141) against the biasing of the restoring force (48;148) in response to the voltage applied to the coil (40;140) between a closed position when the coil (40;140) is de-energised and an open position when the coil (40;140) is energised for controlling movement of the valve member (28;128) relative to the valve seating (25;125) by means of the hydrostatic fluid pressure acting on the valve member (28;128), and the shuttle (41;141) includes a low coercivity material and a permanent magnet (42;142) with the permanent magnet (42;142) being arranged so that, on energising the coil (40;140), the shuttle (41;141) is displaced by a repulsion force (F) generated between the electromagnet (39;139) and the permanent magnet (42;142) and thereby opens the pilot valve (38;138) causing the valve member (28;128) to move away from the valve seating (25;125) allowing fluid flow, wherein the said repulsion force (F) decreases with movement (x) of the shuttle (41;141) against the biasing of the restoring force (48;148) such that, by varying the energising voltage applied to the coil (40;140), the displacement of the shuttle (41;141) and therefore the position of the valve member (28;128) relative to the valve seating (25;125) is progressively adjustable for controlling fluid flow rate.

2. A solenoid valve according to Claim 1 characterised in that the valve member (28;128) comprises a flexible diaphragm (28;128) and the pilot valve (38;138) is axially movable with the shuttle (41;141) to open and close an orifice (51;151) to control the pressure differential across the diaphragm (28;128) for moving the diaphragm (28;128) relative to the valve seating (25;125) in response to the energisation of the coil (40;140).

3. A solenoid valve according to Claim 1 or Claim 2 characterised in that means is provided for reducing friction and/or the effects of hysteresis on positioning of the shuttle (41;141).

4. A solenoid valve according to any one of the preceding Claims characterised in that means, for example a flowmeter (9;109) is provided for monitoring the flow rate and generating a signal related to the flow rate for adjusting the energising voltage to maintain a selected flow rate substantially constant.

5. A solenoid valve according to Claim 4 characterised in that the flowmeter (9;109) comprises a flow monitoring turbine having a rotor (12;112) and pick-up means (16,17;116,117) responsive to rotation of the rotor (12;112) for generating the signal related to flow rate.

6. A solenoid valve according to Claim 5 characterised in that the rotor (12;112) is adapted to be self-centering, for example by having a density substantially the same or slightly lower than that of the fluid to be monitored and/or by distributing the fluid flow uniformly around the peripheral edge of the rotor (12;112).

7. A solenoid valve according to Claim 6 characterised in that the rotor (12;112) is positioned in an annular chamber (7;107) having a fluid orifice (15;115), for example a circumferential slot or a series of circumferentially spaced holes, at the periphery of the rotor (12;112) for uniformly distributing the fluid flow.

8. A solenoid valve according to Claim 7 characterised in that the fluid orifice (15;115) connects the chamber (7;107) to an annular outer chamber (8;108) having a tangential fluid inlet (11,111) that is preferably axially offset relative to the fluid orifice (15;115).

9. A solenoid valve according to any one of Claims 5 to 8 characterised in that the rotor (12) is concentric with the valve seating (28).

10. An ablutionary shower installation comprising respective solenoid valves according to any one of the preceding Claims for controlling mixing of hot and cold water supplies.

11. An instantaneous water heater comprising a solenoid valve according to any one of Claims 1 to 9 for controlling flow rate.

## Patentansprüche

1. Magnetventil (27; 127) zur Durchflußsteuerung mit einem Elektromagneten (39; 139), der eine Erregerspule (40; 140) und einen Anker (41; 141) aufweist, welcher axial gegen die Federung einer Rückstellkraft (48; 148) in Abhängigkeit von einer Erregerspannung beweglich ist, die an die Spule (40; 140) angelegt wird, um dadurch die Bewegung eines Ventilteils (28; 128) bezüglich eines Ventilsitzes (25; 125) zu steuern, wobei die Position des Ventilteils (28; 128) verstellbar ist, um den Durchfluß durch Änderung der Erregerspannung zu steuern, dadurch gekennzeichnet, daß mit dem Anker (41; 141) ein Pilotventil (38; 138) betriebsmäßig verbunden ist und axial mit dem Anker (41; 141) gegen die Federung der Rückstellkraft (48; 148) in Abhängigkeit von der an die Spule (40; 140) angelegten Spannung zwischen einer geschlossenen Stellung beweglich ist, wenn die Spule (40; 140) entregt ist und einer geöffneten Stellung, wenn die Spule (40; 140) erregt ist, um die Bewegung des Ventilteils (28; 128) bezüglich des Ventilsitzes (25; 125) mittels des hydrostatischen Flüssigkeitsdrucks zu steuern, der auf den Ventilteil (28; 128) wirkt, und daß der Anker (41; 141) ein Material niedriger Koerzivität und einen Permanentmagneten (42; 142) enthält, wobei der Permanentmagnet (42; 142) derart ausgebildet ist, daß beim Erregen der Spule (40; 140) der Anker (41; 141) durch eine Abstoßkraft (F) verschoben wird, die zwischen dem Elektromagneten (39; 139) und dem Permanentmagneten (42; 142) erzeugt wird, und dadurch das Pilotventil (38; 138) öffnet, wodurch der Ventilteil (28; 128) von dem Ventilsitz (25; 125) weg bewegt wird und einen Durchfluß erlaubt, wobei die Abstoßkraft (F) mit der Bewegung (x) des Ankers (141) gegen die Federung der Rückstellkraft (48; 148) derart abnimmt, daß durch Änderung der Erregerspannung, die an die Spule (40; 140) angelegt ist, die Verschiebung des Ankers (41; 141) und folglich die Stellung des Ventilteils (28; 128) bezüglich des Ventilsitzes (25; 125) zur Steuerung der Durchflußmenge fortschreitend verstellbar ist.

2. Magnetventil nach Anspruch 1, dadurch gekennzeichnet, daß der Ventilteil (28; 128) eine flexible Membran (28; 128) aufweist, und daß das Pilotventil (38; 138) mit dem Anker (41; 141) gemeinsam axial beweglich ist, um eine Öffnung (51; 151) zu öffnen und zu schließen, um dadurch das Druckdifferential über die Membran (28; 128) zum Bewegen der Membran (28; 128) bezüglich des Ventilsitzes (25; 125) in Abhängigkeit von der Erregung der Spule (40; 140) zu steuern.

3. Magnetventil nach Anspruch 1 oder 2, dadurch gekennzeichnet, daß Einrichtungen vorgesehen sind, um die Reibung und/oder die Wirkungen der Hysterese bei der Positionierung des Ankers (41; 141) zu verringern.

4. Magnetventil nach einem der vorstehenden Ansprüche, dadurch gekennzeichnet, daß Einrichtungen, beispielsweise ein Strömungsmesser (9; 109), vorgesehen sind, um die Strömungsmenge zu überwachen und um ein Signal zu erzeugen, welches mit der Strömungsmenge in Beziehung steht, um dadurch die Erregerspannung zu verstellen, so daß eine gewählte Strömungsmenge im wesentlichen konstant gehalten wird.

5. Magnetventil nach Anspruch 4, dadurch gekennzeichnet, daß der Strömungsmesser eine Strömungsüberwachungsturbine mit einem Rotor (12; 112) und Aufnehmereinrichtungen (16, 17; 116, 117) aufweist, die auf die Drehung des Rotors (12; 112) ansprechen, um ein mit der Strömungsmenge in Beziehung stehendes Signal zu erzeugen.

6. Magnetventil nach Anspruch 5, dadurch gekennzeichnet, daß der Rotor (12; 112) selbstzentrierend ausgebildet ist, beispielsweise indem dieser eine Dichte aufweist, die gleich oder geringfügig niedriger als die der zu überwachenden Flüssigkeit ist, und/oder indem die Flüssigkeitsströmung gleichmäßig um die Umfangskante des Rotors (12; 112) verteilt wird.

7. Magnetventil nach Anspruch 6, dadurch gekennzeichnet, daß der Rotor (12; 112) in einer ringförmigen Kammer (7; 107) angeordnet ist, welche eine Flüssigkeitsöffnung (15; 115), beispielsweise einen Umfangsschlitz oder eine Reihe von um den Umfang verteilten Löchern am Umfang des Rotors (12; 112), aufweist, um die Flüssigkeitsströmung gleichmässig zu verteilen.

8. Magnetventil nach Anspruch 7, dadurch gekennzeichnet, daß die Flüssigkeitsöffnung (15; 115) die Kammer (7; 107) mit einer ringförmigen äußeren Kammer (8; 108) verbindet, welche einen tangentialen Flüssigkeitseinlaß (11; 111) aufweist, welcher bevorzugt bezüglich der Flüssigkeitsöffnung (15; 115) axial versetzt ist.

9. Magnetventil nach einem der Ansprüche 5 bis 8, dadurch gekennzeichnet, daß der Rotor (12) zu dem Ventilsitz (28) konzentrisch ist.

10. Duschanlage mit entsprechenden Magnetventilen nach einem der vorstehenden Ansprüche zum Steuern der Zufuhr beim Mischen von heißem und kaltem Wasser.

11. Durchlauferhitzer mit einem Magnetventil nach einem der Ansprüche 1 bis 9 zum Steuern der Strömungsmenge.

## Revendications

1. Electrovanne (27; 127) pour commander un débit de fluide, qui comprend un électro-aimant (39; 139) comportant une bobine d'excitation (40; 140) et une navette (41; 141) mobile axialement à l'encontre de la sollicitation d'une force de restauration (46; 146) en réponse à une tension d'excitation appliquée à la bobine (40; 040) pour commander le mouvement d'un élément de vanne (28; 128) par rapport à un siège de vanne (25; 125), la position de l'élément de vanne (28; 128) étant ajustable pour commander le débit en faisant varier ladite tension d'excitation, caractérisé en ce qu'une vanne pilote (38; 138) est associée activement à la navette (41; 141) et est déplaçable axialement avec la navette (41; 141) à l'encontre de la sollicitation de la force de restauration (48; 148) en réponse à la tension appliquée à la bobine (40; 140) entre une position de fermeture où la bobine (40; 140) est désexcitée et une position d'ouverture où la bobine (40; 140) est excitée pour commander le mouvement de l'élément de vanne (28; 128) par rapport au siège de vanne (25; 125) via une pression de fluide hydrostatique agissant sur l'élément de vanne (28; 128), et la navette (41; 141) comprend un matériau de faible pouvoir coercitif et un aimant permanent (42; 142), l'aimant permanent (42; 142) étant agencé de telle sorte que, lors de l'excitation de la bobine (40; 140), la navette (41; 141) soit déplacée par une force de répulsion (F) générée entre l'électro-aimant (39; 139) et l'aimant permanent (42; 142) et ouvre de ce fait la vanne pilote (38; 138), ce qui amène l'élément de vanne (28; 128) à s'écarter du siège de vanne (25; 125) pour permettre l'écoulement de fluide, dans laquelle ladite force de répulsion (F) diminue avec le mouvement (x) de la navette (41; 141) à l'encontre de la sollicitation de la force de restauration (48; 148) de telle sorte que, en faisant varier la tension d'excitation appliquée à la bobine (40; 140), le déplacement de la navette (41; 141) et donc la position de l'élement de vanne (28; 128) par rapport au siège de vanne (25; 125) soient progressivement ajustables pour commander le débit de fluide.

2. Electrovanne selon la revendication 1, caractérisée en ce que l'élément de vanne (28; 128) comprend un diaphragme flexible (28; 128) et la vanne pilote (38; 138) est mobile axialement avec la navette (41; 141) pour ouvrir et fermer un orifice (51; 151) afin de commander la différence de pression en travers du diaphragme (28; 128) pour déplacer le diaphragme (28; 128) par rapport au siège de vanne (25; 125) en réponse à l'excitation de la bobine (40; 140).

3. Electrovanne selon la revendication 1 ou 2, caractérisée en ce que des moyens sont prévus pour réduire le frottement et/ou les effets de l'hystérésis sur le positionnement de la navette (41; 141).

4. Electrovanne selon l'une quelconque des revendications précédentes, caractérisée en ce que des moyens, par exemple, un fluxmètre (9; 109), sont prévus pour contrôler le débit et générer un signal en rapport avec le débit pour ajuster la tension d'excitation afin de maintenir un débit sélectionné sensiblement constant.

5. Electrovanne selon la revendication 4, caractérisée en ce que le fluxmètre (9; 109) comprend une turbine de contrôle de débit comportant un rotor (12; 112) et des moyens de détection (16, 17; 116, 117) sensibes à la rotation du rotor (12; 112) pour générer le signal en rapport avec le débit.

6. Electrovanne selon la revendication 5, caractérisée en ce que le rotor (12; 112) est à même d'être auto-centrant, par exemple, en ayant une densité sensiblement identique ou légèrement inférieure à celle du fluide à contrôler et/ou en distribuant l'écoulement de fluide uniformément autour du bord périphérique du rotor (12; 112).

7. Electrovanne selon la revendication 6, caractérisée en ce que le rotor (12; 112) est disposé dans une chambre annulaire (7; 107) ayant un orifice à fluide (15; 115), par exemple, une fente périphérique ou une série d'orifices espacés sur la périphérie, à la périphérie du rotor (12; 112) pour répartir uniformément l'écoulement de fluide.

8. Electrovanne selon la revendication 7, caractérisée en ce que l'orifice à fluide (15; 115) connecte la chambre (7; 107) à une chambre externe annulaire (8; 108) ayant une entrée de fluide tangentielle (11; 111) qui est de préférence décalée axialement par rapport à l'orifice à fluide (15; 115).

9. Electrovanne selon l'une quelconque des revendications 5 à 8, caractérisée en ce que le rotor (12) est concentrique avec le siège de vanne (28).

10. Installation de douche comprenant des électrovannes respectives selon l'une quelconque des revendications précédentes pour commander le mélange d'eau chaude et d'eau froide.

11. Dispositif chauffe-eau instantané comprenant une électrovanne selon l'une quelconque des revendications 1 à 9 pour commander le débit d'écoulement.
